Europäisches Patentamt

European Patent Office

Office européen des brevets

(19)

(11) Veröffentlichungsnummer: **0 363 563 B1**

(12) **EUROPÄISCHE PATENTSCHRIFT**

(45) Veröffentlichungstag der Patentschrift: **19.11.92**

(51) Int. Cl.⁵: **F16F 13/00**

(21) Anmeldenummer: **89110331.9**

(22) Anmeldetag: **08.06.89**

(54) **Gummilager.**

(30) Priorität: **30.09.88 DE 3833182**

(43) Veröffentlichungstag der Anmeldung:
**18.04.90 Patentblatt 90/16**

(45) Bekanntmachung des Hinweises auf die
Patenterteilung:
**19.11.92 Patentblatt 92/47**

(84) Benannte Vertragsstaaten:
**AT DE ES FR GB IT NL SE**

(56) Entgegenhaltungen:
**DE-A- 3 019 337**
**DE-A- 3 024 090**
**FR-A- 1 260 067**
**FR-A- 2 255 508**
**GB-A- 2 074 962**

**PATENT ABSTRACTS OF JAPAN, Band 6, Nr.
45 (M-118)[923], 20. März 1982; & JP-A-56 160
220 (NISSAN JIDOSHA K.K.) 09-12-1981**

**PATENT ABSTRACTS OF JAPAN, Band 7, Nr.
163 (M-229)[1308], 16. Juli 1983; & JP-A-58 68
526 (NISSAN JIDOSHA K.K.) 23-04-1983**

(73) Patentinhaber: **Firma Carl Freudenberg
Höhnerweg 2-4
W-6940 Weinheim/Bergstrasse(DE)**

(72) Erfinder: **Freudenberg, Tillman, Dr.
Hügelstrasse 49
W-6940 Weinheim(DE)**

EP 0 363 563 B1

## Beschreibung

Die Erfindung betrifft ein Gummilager nach dem Oberbegriff von Anspruch 1.

Ein solches Gummilager ist aus der FR-A-1 260 067 bekannt. Die Entlastungsfeder und die Tragfeder werden dabei im belasteten Zustand gleichermaßen elastisch deformiert. Es wurde beobachtet, daß der Wert der Tragkraft des neuwertigen Gummilagers insbesondere bei einer Verwendung in wärmeren Klimazonen bedeutend absinkt.

Gummilager mit hydraulischer Dämpfung gelangen insbesondere in bezug auf die Lagerung von Verbrennungsmotoren in Kraftfahrzeugen zur Anwendung. Sie haben den Zweck die motorerregten, hochfrequenten Schwingungen kleiner Amplitude möglichst gut zu isolieren und die durch das Überfahren von Fahrbahnunebenheiten verursachten, niederfrequenten Schwingungsausschläge des Motors großer Amplitude zu dämpfen.

Der Erfindung liegt die Aufgabe zugrunde, ein Gummilager der eingangs genannten Art derart weiterzuentwickeln, daß das Betriebsverhalten des neuwertigen Gummilagers auch bei einer Verwendung in heißen Klimazonen weitgehend unverändert über lange Zeiträume erhalten bleibt. Dabei soll insbesondere während der gesamten Gebrauchsdauer eine gute Isolierung der motorerregten, hochfrequenten Schwingungen kleiner Amplitude gewährleistet sein.

Diese Aufgabe wird erfindungsgemäß mit den kennzeichnenden Merkmalen von Anspruch 1 gelöst. Auf vorteilhafte Ausgestaltungen nehmen die Unteransprüche Bezug.

Bei dem erfindungsgemäßen Gummilager sind die Entlastungsfeder und die Tragfeder in belastetem Zustand des Gummilagers derart gegeneinander verspannt, daß die Tragfeder nach dem Aufbringen der zu tragenden Last auf das Traglager im wesentlichen spannungsfrei ist. Die Tragfeder kann hierdurch besonders weich gestaltet werden mit der Maßgabe, daß eine ausreichende Dämpfung tieffrequenter Schwingungen gewährleistet ist. Dem Wunsche nach einer guten Isolierung der motorerregten, hochfrequenten Schwingungen kommt eine solche Ausbildung sehr entgegen.

Die Entlastungsfeder kann aus Metall bestehen und sie weist in diesem Falle eine besonders gute Beständigkeit gegen Relaxationserscheinungen auf. Auch die Verwendung von faserverstärktem Kunstharz ist zu ihrer Herstellung möglich. In diesem Falle ergibt sich bei gleicher Tragfähigkeit ein vergleichsweise reduziertes Gewicht.

Die Entlastungsfeder kann als Tellerfeder ausgebildet und zwischen der Wärmequelle und der Tragfeder angeordnet sein, was neben einer besonders einfachen Herstellbarkeit eine gute Abschirmung des Gummilagers gegenüber der Einwirkung von Wärmestrahlen gewährleistet. Die äußere Gestalt entsprechender Tellerfedern ist dabei so festzulegen, daß eine ausreichende Relativbeweglichkeit des Traglagers in bezug auf das Auflager gewährleistet ist. Für gebräuchliche Anwendungsfälle genügt eine hohlkegelige Gestaltung der Tellerfeder.

Für Anwendungsfälle, bei denen mit besonders großen Relativbewegungen des Traglagers in bezug auf das Auflager gerechnet werden muß, hat es sich bewährt, wenn die Tellerfeder mit in Umfangsrichtung verteilten Einschnitten versehen ist, die, vom Außenumfang und/oder vom Innenumfang ausgehend, ihr Profil parallel zur Verformungsachse der Tragfeder ganz durchschneiden. Die beiderseits der Einschnitte in Umfangsrichtung aufeinanderfolgenden Abschnitte haben bei einer solchen Ausführung auch eine gute Relativbeweglichkeit in Umfangsrichtung. Überlastungsbedingten Beschädigungen läßt sich dadurch wirksam vorbeugen.

Die Einschnitte können vom Außen- und/oder vom Innenumfang der Tellerfeder ausgehend tangential oder spiralig in das Profil derselben eingreifen, wobei sichergestellt sein muß, daß der Gesamtzusammenhalt gewahrt ist. Insbesondere in Fällen, in denen die einzelnen durch die Einschnitte in Umfangsrichtung aufeinanderfolgenden Abschnitte mit der Umfangsrichtung einen spitzen Winkel einschließen ergibt sich in diesem Falle eine deutliche Vergrößerung der Federlänge der Entlastungsfeder. Die Abschnitte können die Verformungsachse auch spiralig umschließen. Der verfügbare Federweg erfährt eine dementsprechende Vergrößerung.

Im Hinblick auf eine kostengünstige Herstellbarkeit hat es sich als vorteilhaft bewährt, wenn die Einschnitte eine im wesentlichen radiale Erstreckung haben.

Die zwischen ihnen in Umfangsrichtung der Tellerfeder aufeinanderfolgenden Abschnitte sind dabei unter statischen Gesichtspunkten zweckmäßig so gestaltet, daß sie im vorspringenden Bereich einen zunehmend verminderten Querschnitt haben und eine möglichst ausgeglichene, spezifische Belastung auf ihrer gesamten Länge.

Die Tellerfeder ist zweckmäßig nur in dem einen Umfangsbereich, nämlich dem Innenumfangsbereich oder dem Außenumfangsbereich an dem Traglager bzw. Auflager festgelegt und im Bereich des anderen Umfangsbereichs radial verschiebbar auf dem Auf- bzw. Traglager abgestützt. Dehn-und Stauchbeanspruchungen der Abschnitte während der bestimmungsgemäßen Einfederung werden hierdurch vermieden. Gegebenenfalls vorhandene Einschnitte sollten bei einer entsprechenden Ausführung jedoch zweckmäßig nur im Bereich des radial verschiebbar abgestützten Umfangsbereiches vorgesehen sein.

Um zu verhindern, daß während der bestimmungsgemäßen Verwendung hochfrequente Schwingungen und insbesondere Schallschwingungen über die Entlastungsfeder von dem Traglager auf das Auflager übertragen werden hat es sich als zweckmäßig erwiesen, wenn zwischen dem verschiebbar abgestützten Umfangsbereich der Tellerfeder und dem Trag- bzw. Auflager ein elastisch nachgiebiger Isolierkörper angeordnet ist, zweckmäßig ein solcher aus Gummi. Dieser kann einstückig mit dem die Tragfeder bildenden Gummikörper ausgebildet sein.

Im Hinblick auf die Verhinderung von Eigenschwingungen der Entlastungsfeder und/oder des Federelementes hat es sich als vorteilhaft bewährt, wenn die Tragfeder und die Entlastungsfeder einander im mittleren Bereich der radialen Erstreckung ihres Profils an mindestens einer Berührungsstelle berühren. Zweckmäßig sind mehrere Berührungsstellen vorgesehen, welche durch Vorsprünge der Tragfeder und/oder der Entlastungsfeder gebildet sind und die in Umfangsrichtung einen Abstand A voneinander haben.

Die Entlastungsfeder kann von unterschiedlicher Gestalt sein, wobei es sich als zweckmäßig erwiesen hat, die Ausbildung, gegenseitige Zuordnung und Anbringung an dem Gummilager so vorzusehen, daß betriebsbedingte Relativbewegungen des Traglagers in senkrechter Richtung unter Vermeidung von Quer- und Umfangskräften aufgefangen werden. Unsymmetrisch gestaltete Entlastungsfedern sollten unter diesem Gesichtspunkt zweckmäßig in spielgelbildlicher Anordnung vorgesehen sein bzw. in gleichmäßiger Verteilung in Umfangsrichtung.

Unter Einhaltung der genannten Bedingung läßt sich als Entlastungsfeder eine Blattfeder verwenden, zweckmäßig in Gestalt einer Brücke, welche mit den beiderseits vorspringenden Enden relativ verschiebbar auf dem Auflager abgestützt und im mittleren Bereich ihrer Erstreckung an dem Traglager festgelegt ist.

Die Herstellung und Anbringung ist besonders einfach.

Die Entlastungsfeder kann auch als Haarnadelfeder ausgebildet sein, was die Erzielung besonders großer Federwege erleichtert.

Ähnlich große Federwege lassen sich erzielen unter Verwendung von Spiralfedern. Ihre Verfügbarkeit ist indessen besser als diejenige von Haarnadelfedern, was sich unter dem Gesichtspunkt der Kosten als vorteilhaft bemerkbar macht.

Kegelfedern haben den Vorteil, daß sie neben ihrem vorstehend angegebenen Zweck dem Traglager eine gewisse Führung auf dem Auflager zu verleihen vermögen. Seitlichen Ausweichbewegungen des Traglagers wird hierdurch vorgebeugt.

Es ist auch möglich, Schraubenfedern als Entlastungsfedern einzusetzen. Sie haben sich auf vielen Gebieten der Technik hervorragend bewährt und sind auch für das vorliegende Anwendungsgebiet hervorragend geeignet.

Sofern Spiral- Kegel- oder Schraubenfedern zur Anwendung gelangen, besteht die Möglichkeit, diese so anzuordnen, daß die Bewegungsachse konzentrisch umschlossen ist. Hierbei können sich jedoch während der bestimmungsgemäßen Verwendung Umfangskräfte ergeben, was sich dadurch verhindern läßt, daß gegensinnig gewickelte Federn ineinander liegend vorgesehen sind.

Anstelle einer derartigen, konzentrischen Zuordnung zur Verformungsachse ist es auch möglich, wenigstens zwei Entlastungsfedern vorzusehen, welche in Umfangsrichtung des Gummilagers gleichmäßig verteilt sind. Das Gummilager insgesamt verhält sich hierdurch bei Einleitung von Schwingungen in das Traglager nach außen neutral, d.h. es ergeben sich keine die senkrechte Relativbewegung des Traglagers überlagernde Kräfte in Quer- oder Umfangsrichtung.

Im Hinblick auf die Erzielung einer besonders kleinen Baugröße, welche sich nicht nur aus Platz- sondern auch aus Gewichtsgründen als vorteilhaft bewährt hat, sollte die Entlastungsfeder zweckmäßig als Druckfeder ausgebildet sein. Eine Ausgestaltung als Zugfeder ist aber selbstverständlich ebenfalls möglich.

Um eine Verspannung des erfindungsgemäßen Gummilagers in Querrichtung zu verhindern, welche das Ergebnis einer unsachgemäßen Montage sein kann, hat es sich als vorteilhaft bewährt, wenn das Traglager durch eine Schubfeder auf der Tragfeder abgestützt ist. Die Schubfeder kann aus gummilelastischem Werkstoff bestehen, zweckmäßig aus Gummi und sollte zweckmäßig im wesentlichen quer zur Bewegungsachse des Traglagers nachgiebig gestaltet sein.

Grundsätzlich ist es möglich, die Entlastungsfeder im Inneren des flüssigkeitsgefüllten Arbeitsraumes anzuordnen und hierdurch die Entstehung von Eigenschwingungen zu verhindern. Im Hinblick auf eine vereinfachte Anpaßbarkeit an zu tragende Belastungen unterschiedlicher Größe hat es sich demgegenüber als vorteilhaft bewährt, wenn die Entlastungsfeder außerhalb des Arbeitsraumes angeordnet und zweckmäßig lösbar mit demselben verbunden ist.

Die mit der Erfindung erzielten Vorteile bestehen vor allem darin, daß sich während der Gebrauchsdauer eine bessere Konstanz der Eigenschaften der neuwertigen Ausführung ergibt. Das erfindungsgemäße Gummilager gewährleistet insbesondere bei einer Verwendung in heißen Klimazonen während langer Zeiträume eine deutlich verbesserte Isolierung hochfrequenter Schwingungen.

Die Erfindung wird nachfolgend anhand der in der Anlage beigefügten Zeichung weiter erläutert.

Es zeigen:

Figuren 1 und 2

ein Gummilager in längsgeschnittener Darstellung und in der Draufsicht, bei der die Entlastungsfeder als Tellerfeder ausgebildet ist.

Figuren 3 und 4

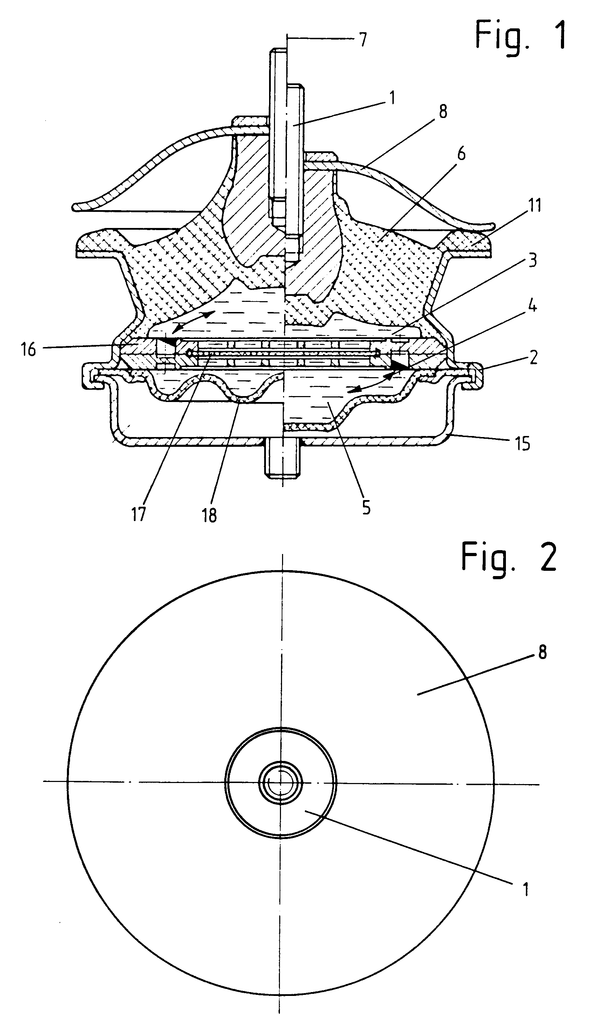

eine Ausführung ähnlich derjenigen nach den Figuren 1 und 2, bei der die Tellerfeder mit vom Außenumfang her in ihr Profil eindringenden Einschnitten versehen ist.

Figuren 5 und 6

eine Ausführung ähnlich derjenigen nach Figur 1, bei der die Tragfeder und die Entlastungsfeder einander im mittleren Bereich der radialen Erstreckung ihres Profils an einer Berührungsstelle berühren.

Figuren 7 und 8

eine Ausführung ähnlich derjenigen nach den Figuren 1 und 2, bei der die Entlastungsfeder als brückenähnlich gestaltete Blattfeder ausgebildet ist.

Figuren 9 und 10

eine Ausführung ähnlich derjenigen nach den Figuren 1 und 2, bei der als Entlastungsfeder mehrere Haarnadelfedern zur Anwendung gelangen.

Fig. 11 und 12

eine Ausführung ähnlich derjenigen nach den Figuren 1 und 2, bei der die Entlastungsfeder durch zwei Schraubenfedern gebildet wird, welche auf einander gegenüberliegenden Seiten des Gummilagers angeordnet sind.

Figuren 13 und 14

ein Gummilager ähnlich der Ausführung nach den Figuren 1 und 2, bei der die Entlastungsfeder als Kegelfeder ausgebildet und der Bewegungsachse konzentrisch zugeordnet ist.

Figur 15

eine Ausführung ähnlich derjenigen nach Figur 1, bei der zwischen der Tragfeder und dem Traglager eine Schubfeder zur Aufnahme von Querkräften vorgesehen ist.

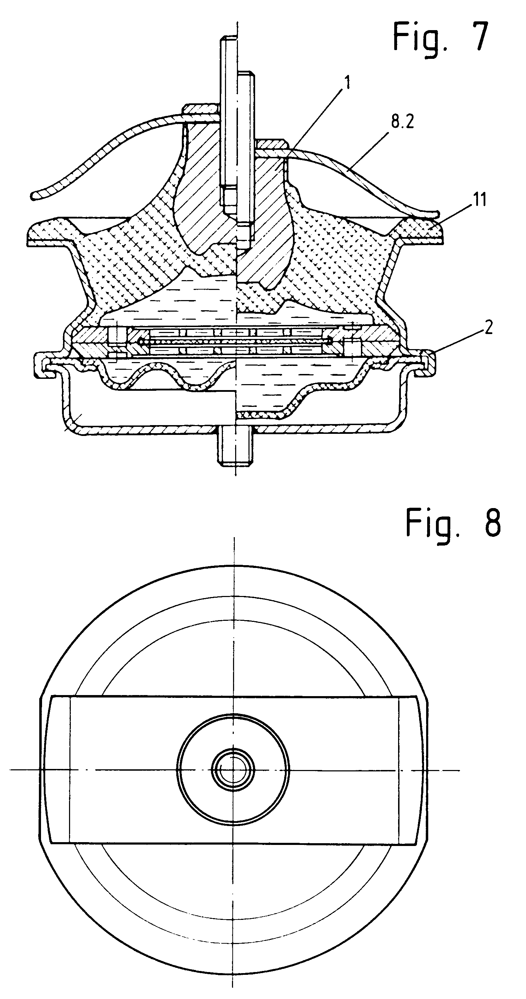

Die Figuren 1 bis 8 sind von der Erfindung nicht abgedeckt.

Die in der Zeichnung enthaltenen Schnittdarstellungen verschiedener Ausführungen von Gummilagern zeigen die verschiedenen Ausführungen im linken Teil der Darstellung jeweils im entlasteten Zustand und im rechten Teil der Darstellung jeweils im belasteten Zustand, d.h., in dem Zustand, in dem sich das Gummilager während der Einwirkung der bestimmungsgemäß zu tragenden, statischen Last befindet. Der allgemeine Aufbau läßt sich wie folgt beschreiben:

Das Gummilager besteht aus dem Traglager 1 und dem Auflager 2 aus metallischen Werkstoffen, welche durch die Tragfeder 6 aus Gummi verbunden sind, beispielsweise durch unmittelbares Anformen und Anvulkanisieren des die Tragfeder 6 bildenden Gummiwerkstoffes.

Das Auflager 2 besteht aus tiefgezogenem Stahlblech und umschließt im unteren Teil der Darstellung den vorspringenden Rand eines im übrigen topfförmig gestalteten Bodenteiles 15, welches ebenso wie das Traglager 1 mit einem Gewindebolzen zur Festlegung an den beiderseits anzuschließenden Maschinenteilen versehen ist. Zugleich umschließt das Auflager 2 und das Bodenteil 15 die zweiteilig ausgebildete Trennwand 16, welche im radial außenliegenden Bereich von der spiralig verlaufenden Dämpfungsöffnung 4 durchdrungen ist und welche im mittleren Bereich ein dünnes Scheibchen 17 umschließt, welches zwischen gitterförmig gestalteten, beiderseits vorgelagerten Anschlägen hin- und herbewegbar ist.

An die Unterseite der Trennwand 16 schließt der Ausgleichsraum 5 an, welcher gegenüber dem Innenraum des Bodenteiles 15 durch eine flexible Membran 18 abgegrenzt ist. Diese ist im Randbereich von einem Metallteil umschlossen und flüssigkeitsdicht in dem Auflager 2 verankert.

Der Arbeitsraum 3, die Verbindungsöffnung 4 und der Ausgleichsraum 5 sind mit einer hydraulischen Flüssigkeit gefüllt, zweckmäßig mit einem Gemisch aus Glykol und Wasser. Das insgesamt verfügbare Volumen ist dadurch von konstanter Größe. An dem Traglager 1, welches durch ein Formteil aus Metall gebildet ist, ist die Entlastungsfeder 8 befestigt. Diese ist als Tellerfeder gestaltet und so geformt, daß ihr nach außen vorspringender Rand im entlasteten Zustand des Gummilagers einen axialen Abstand von dem Isolierkörper 11 des Auflagers 2 aufweist. Die Tellerfeder kann, abweichend von der Darstellung, auch mehrere und gegebenenfalls voneinander abweichend gestaltete Einzelfedern umfassen, die zu einem Paket zusammengefaßt sind.

Nach dem Aufbringen der bestimmungsgemäß zu tragenden Last ergibt sich eine gegenseitige Berührung und der Zustand einer elastischen Vorspannung der Entlastungsfeder 8, welche eine gleich große Entlastung der Tragfeder 6 bedingt. Die Gefahr des Eintretens von Kriech- oder Setzvorgängen des die Tragfeder 6 bildenden, gummielastischen Materials ist dementsprechend reduziert und über lange Zeiträume eine bessere Konstanz der Gebrauchseigenschaften gewährleistet, insbesondere in Fällen, in denen die Entlastungsfeder 8 eine Tragfähigkeit hat, die wenigstens so groß ist wie diejenige der Tragfeder 6 und dementsprechend wenigstens 50 % der zu tragenden, statischen Last in sich aufnimmt. Die Tragfeder 6 kann dementsprechend weicher gestaltet werden, wodurch sie hochfrequenten Druckänderungen in dem Arbeitsraum 3 leichter auszuweichen vermag.

Entsprechende Schwingungen des Traglagers 1 werden dadurch in verbesserter Weise von dem Auflager 2 ferngehalten, d.h. in verbesserter Weise isoliert. Zusätzlich ergibt sich bei Einleitung entsprechender Schwingungen eine entsprechende Relativverlagerung des Plättchens 17 zwischen den beiderseits vorgelagerten Anschlägen. Druckänderungen werden hierdurch verhindert und die Erzielung einer guten Isolierwirkung wird begünstigt.

Bei Einleitung tieffrequenter Schwingungen in das Traglager 1 gelangt demgegenüber das in der kanalartig ausgebildeten Dämpfungsöffnung 4 enthaltene Flüssigkeitsvolumen in eine Resonanzbewegung, die in bezug auf die erregende Schwingung von entgegensetzter Richtung ist. Die Schwingungen erfahren hierdurch eine hochgradige Dämpfung.

Das vorstehend beschriebene, grundsätzliche Funktionsschema ist bei den nachfolgend behandelten Ausführungen stets vorhanden. Die Erläuterung beschränkt sich daher auf die unterschiedlichen Ausführungsformen der Entlastungsfedern.

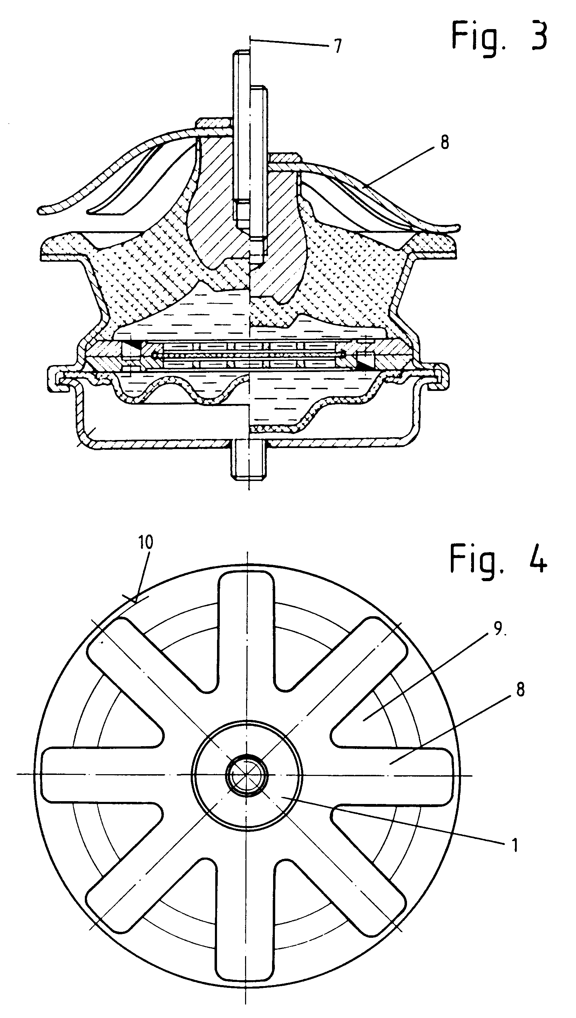

Bei der Ausführung nach den Figuren 3 und 4 ist die Entlastungsfeder 8 ebenfalls als Tellerfeder gestaltet, mit der Abweichung, daß in Umfangsrichtung gleichmäßig verteilte Einschnitte 9 vorgesehen sind, die vom Außenumfang 10 ausgehend, ihr Profil parallel zur Verformungsachse 7 der Tragfeder ganz durchschneiden. Die Einschnitte 9 haben in radialer Richtung nach außen eine sich zunehmend in Umfangsrichtung vergrößernde Erstreckung. Hierdurch wird die sich bei der Einleitung von Schwingungen in das Traglager ergebende, spezifische Querschnittsbelastung der zwischen den Einschnitten 9 liegenden Abschnitte der Entlastungsfeder 8 vergleichmäßigt.

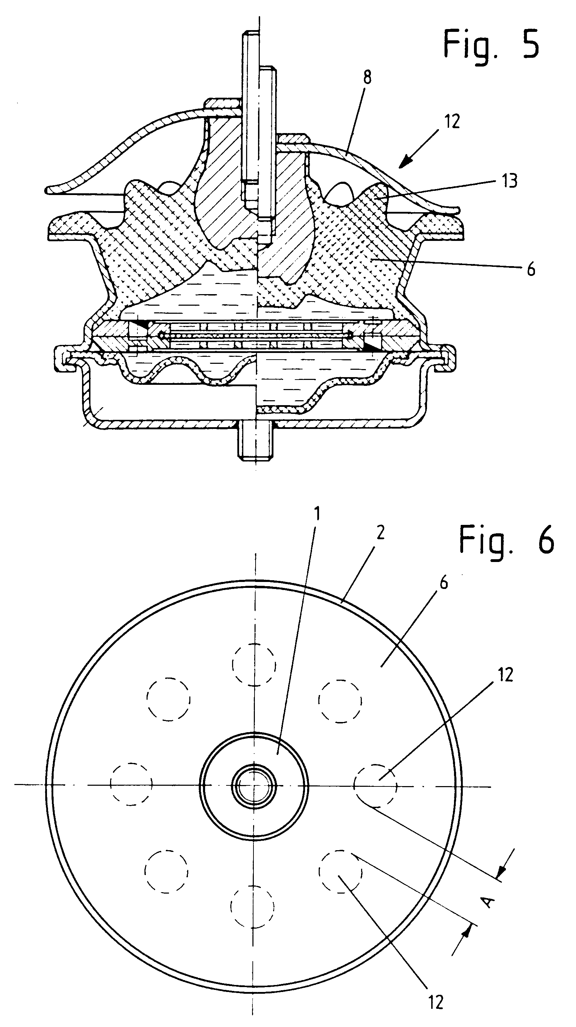

Die Ausführung nach den Figuren 5 und 6 ist entsprechend derjenigen nach den Figuren 1 und 2 gestaltet. Zusätzlich sind indessen zwischen der Tragfeder 6 und der Entlastungsfeder 8 im mittleren Bereich der radialen Erstreckung ihres Profils Berührungsstellen 12 vorgesehen, welche gleichmäßig in Umfangsrichtung verteilt sind und gleichmäßige Abstände voneinander haben. Sie werden durch den vorspringenden Bereich von einstückig angeformten Vorsprüngen 13 der aus Gummi bestehenden Tragfeder 6 gebildet und bewirken eine Unterdrückung von Eigenschwingungen der Entlastungsfeder 8 sowie der Tragfeder 6 während der bestimmungsgemäßen Verwendung.

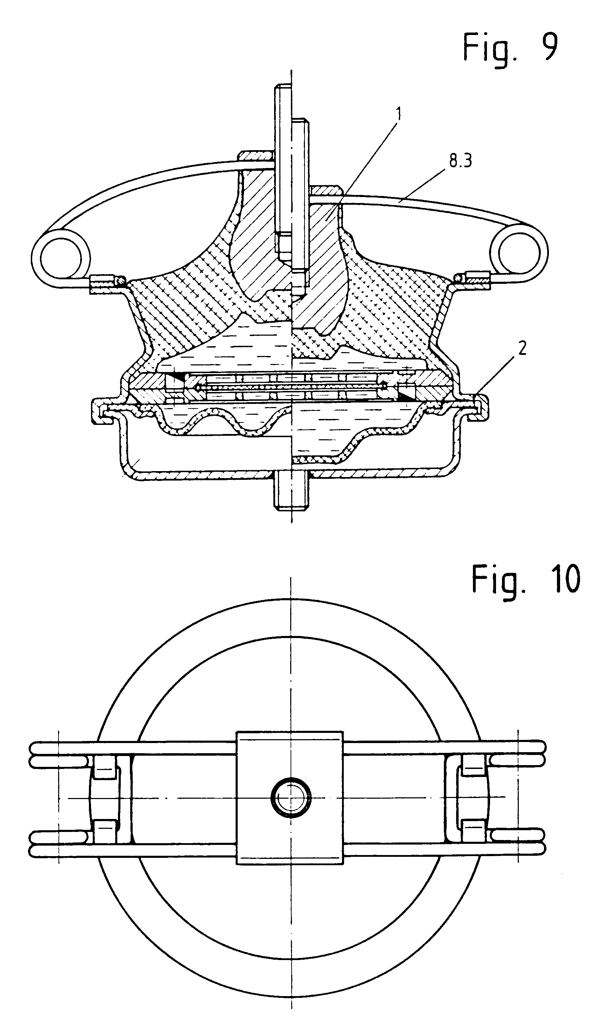

Bei der Ausführung nach den Figuren 7 und 8 besteht die Entlastungsfeder 8 aus einer brückenartig gestalteten Blattfeder 8.2, welche im mittleren Teil ihrer Erstreckung an dem Traglager 1 festgelegt ist und das Auflager 2 im belasteten Zustand mit den seitwärts vorstehenden Enden berührt. Auch dabei ist zwischen Auflager 2 und den vorspringenden Enden der Blattfeder 8.2 ein nachgiebiger Isolierkörper 11 aus gummielastischem Werkstoff vorgesehen, um eine direkte Übertragung hochfrequenter Schwingungen von dem Traglager 1 auf das Auflager 2 zu unterbinden. Ähnlich wie bei den Tellerfedern so ist auch hier eine paketartige Zusammenfassung mehrerer Blattfedern häufig sachdienlich. Die in einem solchen Paket enthaltenen Einzelfedern können sich dabei voneinander unterscheiden. Bei der Ausführung nach den Figuren 9 und 10 besteht die Entlastungsfeder aus Haarnadelfedern 8.3, welche zusammenhängend gewickelt und einerseits an dem Auflager 2 und andererseits an dem Traglager 1 unverrückbar festgelegt sind. Der zur Verfügung stehende Federweg ist bei dieser Ausführung ganz besonders groß.

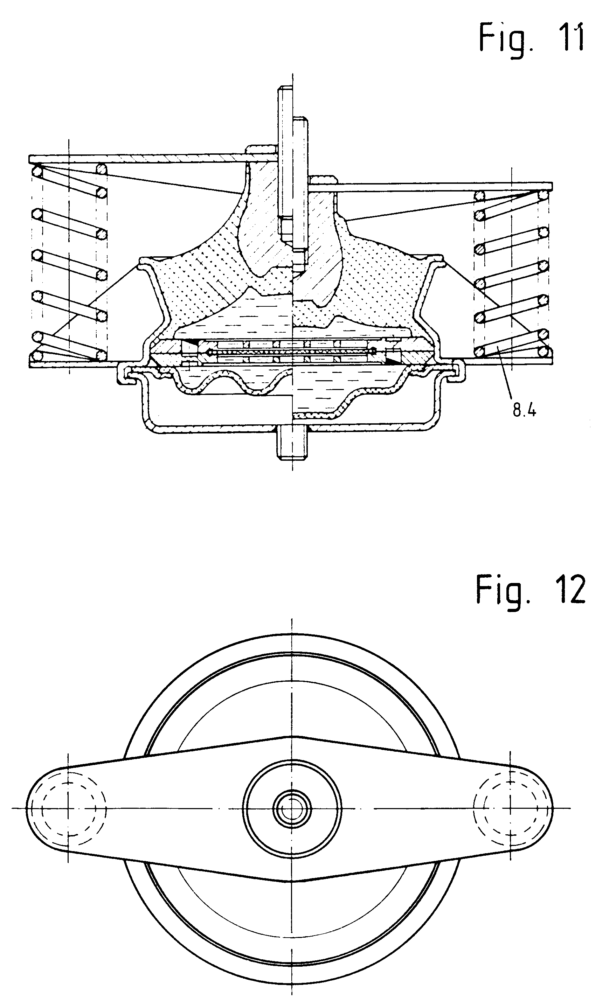

Bei der Ausführung nach Figur 11 besteht die Entlastungsfeder aus zwei einander gegenüberliegenden Schraubenfedern 8.4, welche auf einander gegenüberliegenden Seiten des Gummilagers auf Vorsprüngen einerseits des Traglagers 1 und andererseits des Auflagers 2 abgestützt sind. Der Austausch der Schraubenfedern 8.4 ist bei gegebenenfalls erforderlichen Anpassungen an unterschiedliche Gewichte der zu tragenden Lasten ganz besonders einfach.

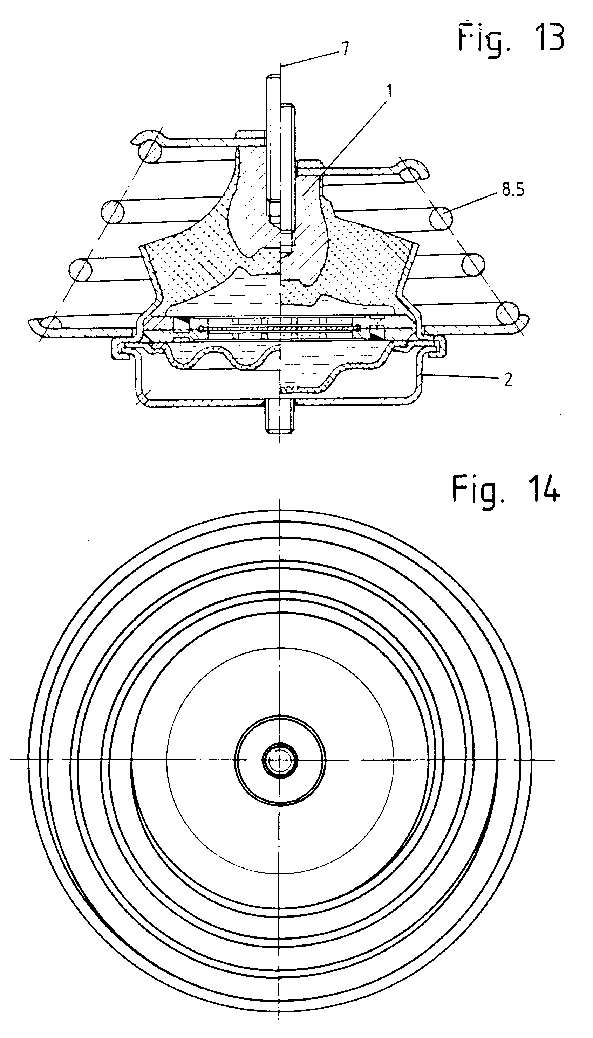

Im Falle der Ausführung nach den Figuren 13 und 14 besteht die Entlastungsfeder 8 aus einer Kegelfeder 8.5, welche die Bewegungsachse und das gesamte Gummilager konzentrisch umschließt und auf ringförmigen Vorsprüngen einerseits des Traglagers 1 und andererseits des Auflagers 2 abgestützt ist. Das Traglager 1 erfährt bei dieser Variante eine zusätzliche Führung durch die Kegelfeder 8.5 in senkrechter Richtung.

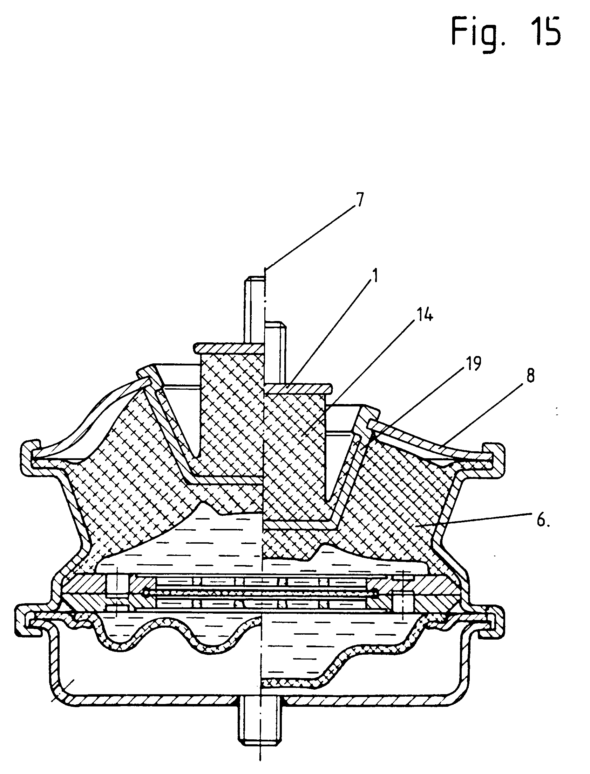

Bei der Ausführung nach Figur 15 ist die Entlastungsfeder 8 als Tellerfeder gestaltet und in dem radial innen- und in dem radial außenliegenden Bereich U-förmig umgriffen von entsprechend gestalteten Vorsprüngen einerseits des Zwischenringes 19 und andererseits des Auflagers 2. Diese sind so dimensioniert, daß die radiale Relativbeweglichkeit zumindest des Innen- oder des Außenumfanges der Tellerfeder 8 nicht gefährdet ist.

Der Zwischenring 19 ist unterseits mit einem Boden versehen, auf welchem die Schubfeder 14 abgestützt ist. Diese ist zugleich unverrückbar an der Unterseite des Auflagers 1 festgelegt. Sie dient der Aufnahme von Querbewegungen, welche sich während der bestimmungsgemäßen Verwendung ergeben können oder auch als Folge einer unsymmetrischen Zuordnung des dargestellten Gummilagers zu einem der von diesem aufeinander abgestützten Maschinenteile.

**Patentansprüche**

1. Gummilager mit hydraulischer Dämpfung, umfassend ein Traglager (1) und ein Auflager (2), die gemeinsam mit einem ringförmig ausgebildeten Federelement aus gummielastischem Werkstoff einen flüssikeitsgefüllten Arbeitsraum (3) umschließen, wobei der Arbeitsraum (3) durch eine Dämpfungsöffnung (4) mit einem Ausgleichsraum (5) verbunden ist, wobei das Federelement als Tragfeder (6) mit senkrechter Verformungsachse (7) ausgebildet und das Traglager (1) durch mindestens eine parallel zu der Tragfeder (6) geschaltete Entlastungsfeder (8) auf dem Auflager (2) abgestützt ist und wobei die Entlastungsfeder (8) aus einem im wesentlichen nicht kriechenden und/oder sich setzenden Material besteht, dadurch gekennzeichnet, daß die Entlastungsfeder (8) und die Tragfeder (6) im unbelasteten Zustand des Gummilagers derart gegeneinander verspannt sind, daß die Tragfeder (6) nach dem Aufbringen der zu tragenden Last auf das Traglager (1) im wesentlichen spannungsfrei ist.

2. Gummilager nach Anspruch 1, dadurch gekennzeichnet, daß die Entlastungsfeder (8) aus Metall besteht.

3. Gummilager nach Anspruch 1, dadurch gekennzeichnet, daß die Entlastungsfeder (8) aus faserverstärktem Kunstharz besteht.

4. Gummilager nach Anspruch 1 bis 3, dadurch gekennzeichnet, daß die Entlastungsfeder (8) als Tellerfeder ausgebildet ist.

5. Gummilager nach Anspruch 4, dadurch gekennzeichnet, daß die Tellerfeder mit in Umfangsrichtung verteilten, durchgehenden Einschnitten (9) versehen ist, die, vom Außenumfang (10) und/oder vom Innenumfang ausgehen.

6. Gummilager nach Anspruch 5, dadurch gekennzeichnet, daß die Einschnitte (9), bezogen auf die im wesentlichen ringförmige Gestalt der Tellerfeder, eine im wesentlichen radiale Erstreckung haben.

7. Gummilager nach Anspruch 4 bis 6, dadurch gekennzeichnet, daß die Tellerfeder in dem einen Umfangsbereich starr an dem Traglager (1) bzw. dem Auflager (2) festgelegt und im Bereich des anderen Umfangsbereiches zumindest im statisch belasteten Zustand radial verschiebbar auf dem Auf- bzw. Traglager (2, 1) abgestützt ist.

8. Gummilager nach Anspruch 7, dadurch gekennzeichnet, daß die Tellerfeder nur im Bereich des radial verschiebbar abgestützten Umfangbereiches mit Einschnitten (9) versehen ist.

9. Gummilager nach Anspruch 7 bis 8, dadurch gekennzeichnet, daß zwischen dem radial verschiebbar abgestützten Umfangsreich der Tellerfeder und dem Trag- bzw. Auflager (1, 2) ein elastisch nachgiebiger Isolierkörper (11) angeordnet ist.

10. Gummilager nach Anspruch 9, dadurch gekennzeichnet, daß der Isolierkörper (11) aus Gummi besteht.

11. Gummilager nach Anspruch 1 bis 10, dadurch gekennzeichnet, daß die Tragfeder (6) und die Entlastungsfeder (8) einander im mittleren Bereich der radialen Erstreckung ihrer Profile an mindestens einer Berührungsstelle (12) berühren.

12. Gummilager nach Anspruch 11, dadurch gekennzeichnet, daß mehrere Berührungsstellen (12) vorgesehen sind und daß die Berührungsstellen durch Vorsprünge (13) der Tragfeder (6) und/oder der Entlastungsfeder (8) gebildet sind, die in Umfangsrichtung einen Abstand voneinander haben.

13. Gummilager nach Anspruch 1 bis 3, dadurch gekennzeichnet, daß die Entlastungsfeder (8) als Blattfeder (8.2) ausgebildet ist.

14. Gummilager nach Anspruch 1 bis 3, dadurch gekennzeichnet, daß die Entlastungsfeder (8) als Haarnadelfeder ( 8.3) ausgebildet ist.

15. Gummilager nach Anspruch 1 bis 3, dadurch gekennzeichnet, daß die Entlastungsfeder (8) als Spiralfeder ausgebildet ist.

16. Gummilager nach Anspruch 1 bis 3, dadurch gekennzeichnet, daß die Entlastungsfeder (8) als Kegelfeder (8.5) ausgebildet ist.

17. Gummilager nach Anspruch 1 bis 3, dadurch gekennzeichnet, daß die Entlastungsfeder (8) als Schraubenfeder (8.4) ausgebildet ist.

18. Gummilager nach Anspruch 15 bis 17, dadurch gekennzeichnet, daß die Entlastungsfeder (8) die Bewegungsachse (7) konzentrisch umschließt.

19. Gummilager nach Anspruch 13 bis 17, dadurch gekennzeichnet, daß wenigstens zwei Entlastungsfedern vorgesehen und in Umfangsrichtung des Gummilagers gleichmäßig verteilt sind.

20. Gummilager nach Anspruch 4 bis 19, dadurch gekennzeichnet, daß die Entlastungsfeder (8) als Druckfeder ausgebildet ist.

21. Gummilager nach Anspruch 1 bis 20, dadurch gekennzeichnet, daß das Traglager (1) durch eine Schubfeder (14) auf der Tragfeder (6) abgestützt ist.

22. Gummilager nach Anspruch 21, dadurch gekennzeichnet, daß die Schubfeder (14) im wesentlichen quer zur Bewegungsachse des Traglagers (7) nachgiebig gestaltet ist.

23. Gummilager nach Anspruch 1 bis 22, dadurch gekennzeichnet, daß die Entlastungsfeder (8) außerhalb des Arbeitsraumes (3) angeordnet ist.

24. Gummilager nach Anspruch 1 bis 23, dadurch gekennzeichnet, daß die Entlastungsfeder (8) eine Tragfähigkeit hat, die wenigstens so groß ist wie diejenige der Tragfeder (6).

**Claims**

1. A rubber mount with hydraulic damping, comprising a bearing mount (1) and a support mount (2) which, together with a spring element of annular construction made of rubber-elastic material, surround an operating space (3) filled with fluid, the operating space (3) being connected through a damping opening (4) to a compensating space (5), the spring element being constructed as a bearing spring (6) with a vertical axis (7) of deformation and the bearing mount (1) being supported on the support mount (2) by at least one relieving spring (8) connected parallel to the bearing spring (6), and the relieving spring (8) being composed of a substantially non-creeping and/or non-settling material, characterised in that the relieving spring (8) and the bearing spring (6) are braced against one another in the unloaded state of the rubber mount in such a way that the bearing spring (6) is substantially tension-free after the load to be carried has been applied to the bearing mount (1).

2. A rubber mount according to claim 1, characterised in that the relieving spring (8) is composed of metal.

3. A rubber mount according to claim 1, characterised in that the relieving spring (8) is composed of fibre-reinforced synthetic resin.

4. A rubber mount according to any of claims 1 to 3, characterised in that the relieving spring (8) is constructed as a disk spring.

5. A rubber mount according to claim 4, characterised in that the disk spring is provided with straight-through incisions (9) which are distributed in the circumferential direction and start from the outside circumference (10) and/or from the inside circumference.

6. A rubber mount according to claim 5, characterised in that the incisions (9) have a substantially radial extension relative to the substantially annular shape of the disk spring.

7. A rubber mount according to any of claims 4 to 6, characterised in that, in one circumferential region, the disk spring is fastened rigidly to the bearing mount (1) or to the support mount (2) and, in the region of the other circumferential region, is supported so as to be radially displaceable on the support mount or bearing mount (2, 1), at least in the statically loaded state.

8. A rubber mount according to claim 7, characterised in that the disk spring is provided with incisions (9) only in the region of the radially displaceably supported circumferential region.

9. A rubber mount according to either of claims 7 and 8, characterised in that an elastically resilient insulator pad (11) is arranged between the radially displaceably supported circumferential region of the disk spring and the bearing mount or support mount (1, 2).

10. A rubber mount according to claim 9, characterised in that the insulator pad (11) is composed of rubber.

11. A rubber mount according to any of claims 1 to 10, characterised in that the bearing spring (6) and the relieving spring (8) contact one another at least at one contact point (12) in the central region of the radial extension of their profiles.

12. A rubber mount according to claim 11, characterised in that a plurality of contact points (12) are provided, and in that the contact points are formed by projections (13) of the bearing spring (6) and/or the relieving spring (8), which projections are spaced apart in the circumferential direction.

13. A rubber mount according to any of claims 1 to 3, characterised in that the relieving spring (8) is constructed as a leaf spring (8.2).

14. A rubber mount according to any of claims 1 to 3, characterised in that the relieving spring (8) is constructed as a hairpin spring (8.3).

15. A rubber mount according to any of claims 1 to 3, characterised in that the relieving spring (8) is constructed as a flat coil spring.

16. A rubber mount according to any of claims 1 to 3, characterised in that the relieving spring (8) is constructed as a conical spring (8.5).

17. A rubber mount according to any of claims 1 to 3, characterised in that the relieving spring (8) is constructed as a helical spring (8.4).

18. A rubber mount according to any of claims 15 to 17, characterised in that the relieving spring (8) surrounds the axis (7) of movement concentrically.

19. A rubber mount according to any of claims 13 to 17, characterised in that at least two relieving springs are provided and are distributed evenly in the circumferential direction of the rubber mount.

20. A rubber mount according to any of claims 4 to 19, characterised in that the relieving spring (8) is constructed as a compression spring.

21. A rubber mount according to any of claims 1 to 20, characterised in that the bearing mount (1) is supported on the bearing spring (6) by a thrust spring (14).

22. A rubber mount according to claim 21, characterised in that the thrust spring (14) is designed to be resilient substantially transversely to the axis of movement of the bearing mount (7).

23. A rubber mount according to any of claims 1 to 22, characterised in that the relieving spring (8) is arranged outside the operating space (3).

24. A rubber mount according to any of claims 1 to 23, characterised in that the relieving spring (8) has a load-bearing capacity which is at least as great as that of the bearing spring (6).

**Revendications**

1. Support en caoutchouc avec amortissement hydraulique, comportant un organe porteur (1) et un appui (2), qui entourent ensemble, avec un élément élastique de forme annulaire constitué d'un matériau élastomère, une chambre de travail (3) remplie de liquide et reliée par une ouverture d'amortissement (4) avec une chambre d'équilibrage (5), l'élément élastique étant agencé comme un ressort porteur (6) comportant un axe vertical de déformation (7) et l'organe porteur (1) étant appuyé sur l'appui (2) par au moins un ressort de décharge (8) disposé parallèlement au ressort porteur (6), ce ressort de décharge (8) se composant d'un matériau qui dans l'essentiel ne flue pas et/ou ne s'affaisse pas, caractérisé en ce que le ressort de décharge (8) et le ressort porteur (6) sont mutuellement déformés, dans l'état non chargé du support en caoutchouc, de telle sorte que le ressort porteur (6) soit sensiblement exempt de tension après la mise en place de la charge à porter sur l'organe porteur (1).

2. Support en caoutchouc selon la revendication 1, caractérisé en ce que le ressort de décharge (8) se compose d'un métal.

3. Support en caoutchouc selon la revendication 1, caractérisé en ce que le ressort de décharge (8) se compose d'une résine synthétique renforcée par fibres.

4. Support en caoutchouc selon les revendications 1 à 3, caractérisé en ce que le ressort de décharge (8) est agencé comme un ressort Belleville.

5. Support en caoutchouc selon la revendication 4, caractérisé en ce que le ressort Belleville est pourvu d'encoches (9) trasversantes réparties dans la direction circonférentielle et qui partent du pourtour extérieur (10) et/ou du pourtour intérieur.

6. Support en caoutchouc selon la revendication 5, caractérisé en ce que les encoches (9) ont, par rapport à la forme sensiblement annulaire du ressort Belleville, une orientation sensiblement radiale.

7. Support en caoutchouc selon les revendications 4 à 6, caractérisé en ce que le ressort Belleville est fixé, dans une zone de son pourtour, rigidement sur l'organe porteur (1) ou l'appui (2) tandis que, dans l'autre zone de son pourtour, il s'appuie, au moins dans un état statiquement chargé, sur l'organe porteur (1) ou l'appui (2) avec possibilité de translation radiale.

8. Support en caoutchouc selon la revendication 7, caractérisé en ce que le ressort Belleville est pourvu d'encoches (9) seulement dans la zone de son pourtour qui est soutenue avec possibilité de translation radiale.

9. Support en caoutchouc selon les revendications 7 et 8, caractérisé en ce qu'il est prévu un corps isolant (11) élastiquement flexible entre la zone de pourtour, soutenue avec possibilité de translation radiale, du ressort Belleville et l'organe porteur (1) ou l'appui (2).

10. Support en caoutchouc selon la revendication 9, caractérisé en ce que le corps isolant (11) se compose de caoutchouc.

11. Support en caoutchouc selon les revendications 1 à 10, caractérisé en ce que le ressort porteur (6) et le ressort de décharge (8) sont mutuellement en contact, dans une zone centrale d'orientation radiale de leurs profils, en au moins un emplacement de contact (12).

12. Support en caoutchouc selon la revendication 11, caractérisé en ce qu'il est prévu plusieurs emplacements de contact (12) et en ce que les emplacements sont créés par des saillies (13) du ressort porteur (6) et/ou des ressorts de décharge (8), qui sont mutuellement espacés dans une direction circonférentielle.

13. Support en caoutchouc selon les revendications 1 à 3, caractérisé en ce que le ressort de décharge (8) est agencé comme une lame élastique (8.2).

14. Support en caoutchouc selon les revendications 1 à 3, caractérisé en ce que le ressort de décharge (8) est agencé comme un ressort en épingle à cheveux (8.3).

15. Support en caoutchouc selon les revendications 1 à 3, caractérisé en ce que le ressort de décharge (8) est agencé comme un ressort spiral.

16. Support en caoutchouc selon les revendications 1 à 3, caractérisé en ce que le ressort de décharge (8) est agencé comme un ressort conique (8.5).

17. Support en caoutchouc selon les revendications 1 à 3, caractérisé en ce que le ressort de décharge (8) est agencé comme un ressort hélicoïdal (8.4).

18. Support en caoutchouc selon les revendications 15 à 17, caractérisé en ce que le ressort de décharge (8) entoure concentriquement l'axe de déplacement (7).

19. Support en caoutchouc selon les revendications 13 à 17, caractérisé en ce qu'il est prévu au moins deux ressorts de décharge qui sont répartis uniformément dans une direction circonférentielle du support en caoutchouc.

20. Support en caoutchouc selon les revendications 4 à 19, caractérisé en ce que le ressort de décharge (8) est agencé comme un ressort de pression.

21. Support en caoutchouc selon les revendications 1 à 20, caractérisé en ce que l'organe porteur (1) s'appuie par l'intermédiaire d'un ressort de poussée (14) sur le ressort porteur (6).

22. Support en caoutchouc selon la revendication 21, caractérisé en ce que le ressort de poussée (14) est agencé de façon à céder dans une direction sensiblement perpendiculairement à l'axe de déplacement de l'organe porteur (7).

23. Support en caoutchouc selon les revendications 1 à 22, caractérisé en ce que le ressort de décharge (8) est disposé à l'extérieur de la chambre de travail (3).

24. Support en caoutchouc selon les revendications 1 à 23, caractérisé en ce que le ressort de décharge (8) a une force de portance qui est au moins aussi grande que celle du ressort porteur (6).

Fig. 1

Fig. 2

Fig. 3

Fig. 4

Fig. 5

Fig. 6

Fig. 7

Fig. 8

Fig. 9

Fig. 10

Fig. 11

8.4

Fig. 12

Fig. 13

Fig. 14

Fig. 15